# NEUE EUROPÄISCHE PATENTSCHRIFT

(11) **EP 0 946 910 B2**
(45) Veröffentlichungstag und Bekanntmachung des Hinweises auf die Entscheidung über den Einspruch: **23.05.2007**
(45) Hinweis auf die Patenterteilung: 06.02.2002
(21) Anmeldenummer: 97952763.7
(22) Anmeldetag: 13.11.1997
(51) Int. Cl.: G05D 7/06, F24D 19/10

(54) **STRANGREGULIERARMATUR**
FLOW REGULATION FITTING
APPAREIL DE ROBINETTERIE POUR LA REGULATION DU DEBIT

(30) Priorität: 21.12.1996 DE 19653937; 16.06.1997 DE 19725376
(43) Veröffentlichungstag der Anmeldung: 06.10.1999
(73) Patentinhaber: KSB Aktiengesellschaft, 67227 Frankenthal (DE)
(72) Erfinder: MEWES, Frank, D-67549 Worms (DE); GABELMANN, Torsten, D-67246 Dirmstein (DE); ILLY, Alois, D-67117 Limburgerhof (DE); RUCKERT, Heinz-Jürgen, D-67259 Grossniedesheim (DE)
(86) Internationale Anmeldenummer: PCT/EP1997/006341
(87) Internationale Veröffentlichungsnummer: WO 1998/028670

(56) Entgegenhaltungen:
- DE-A- 3 432 494
- DE-A- 19 622 438
- US-A- 4 264 961
- US-A- 5 472 014

## Beschreibung

Die Erfindung betrifft eine Strangregulierarmatur nach dem Oberbegriff von Anspruch 1.

Rohrleitungssysteme verteilen ein Fördermedium an einzelne Verbrauchsstellen innerhalb eines Gebäudes oder in einer Anlage. Solche Rohrleitungssysteme weisen gewöhnlich viele Verzweigungen auf und es besteht das Problem, an den einzelnen Verbrauchsstellen eine dem jeweiligen Bedarf im Vollastfall entsprechende Versorgung zu gewährleisten. Eine solche Einregulierung erfolgt für den ungünstigsten Betriebszustand eines Rohrleitungssystems, bei dem alle Verbraucher gleichzeitig den maximalen Bedarf anfordern. Die Verbraucher, zum Beispiel Wärmetauscher, sollen dabei weder unter- noch überversorgt werden. Hierzu ist es bekannt, die einzelnen Rohrleitungsstränge entsprechend einzuregulieren.

Ein dafür verwendetes Hilfsmittel bilden Strangregulierarmaturen, die mit Anschlüssen für Druckmeßleitungen ausgestattet sind. Ein daran anschließbares separates Druckmeßgerät mißt den Differenzdruck innerhalb der Armatur zwischen zwei räumlich voneinander getrennten Meßstellen. Gewöhnlich befindet sich noch ein Absperrkörper der Strangregulierarmatur zwischen den beiden Meßstellen. Nach der Messung des Differenzdruckes wird mit Hilfe von vorhandenen spezifischen Kennwerten der Armatur und der Kenntnis über die Position des Absperrkörpers zum zugehörigen Sitz der aktuelle Volumenstrom ermittelt. Durch Positionsveränderungen des Absperrkörpers wird der Volumenstrom verändert, um mittels weiterer Meß- und Reguliervorgänge einen gewünschten Volumenstrom einzustellen. Solche Armaturen zur Strangregulierung sind durch die DE-C 40 30 104, EP-A 0 671 578 und WO 92/03677 bekannt.

Eine solche Art der Strangregulierung ist sehr zeitaufwendig, unhandlich und deren Durchführung wird bei großen sowie verzweigten Rohrleitungssträngen noch umständlicher. In diesem Zusammenhang ist es auch bekannt, die bei Strangregulierarmaturen ermittelten Differenzdrücke unter Zuhilfenahme von Meßcomputern in die jeweiligen Durchflußmengen umzurechnen. Zu diesem Zweck müssen im Meßcomputer die spezifischen Daten einer Armatur abgelegt sein. Unbedingt erforderlich ist dazu auch das Wissen um die momentane Stellung des Absperrkörpers in Relation zum zugehörigen Sitz. Eine Veränderung der Position des Absperrkörpers bedingt eine Veränderung der Durchflußmenge. Je nach Aufbau muß die jeweilige Hub- bzw. Verdrehstellung eine Absperrkörpers einer Strangregulierarmatur vom Bedienungspersonal erfaßt und zusätzlich manuell in den Meßcomputer eingegeben werden.

Solche Strangregulierarmaturen erlauben zwar eine genaue Einstellung der Durchflußmengen in verschiedenen Rohrleitungssträngen, sie weisen jedoch auch etliche Nachteile auf. Es besteht die Gefahr der Verschmutzung der Meßbohrungen im Gehäuse, es können erhebliche Meßfehler auftreten, wenn die notwendigen Druckmeßleitungen nicht sorgfältigst entlüftet wurden. Weiterhin stellt die Montage bzw. die Demontage der Meßleitungen an die Druckmeßstellen eines druckbeaufschlagten Gehäuses, in dem hohe Temperaturen und/oder Drücke herrschen können, ein großes Gefährdungspotential dar. Zur Vermeidung von Meßungenauigkeiten, die sich durch Verwirbelungen innerhalb des Gehäuses ergeben und wobei die Wirbel negative Auswirkungen auf die Meßgröße haben, sind gewöhnlich vor und hinter den Meßstellen ausreichend lange Beruhigungsstrecken erforderlich, damit eine ausreichende Meßgenauigkeit gewährleistet ist. Die gesamte Meßeinrichtung ist in ihrer Handhabung auch sehr umständlich.

Eine andere Art der Einregulierung von Rohrleitungssträngen ist durch das Produkt TACO-SETTER bekannt, welches im Katalog der Firma Gebrüder Tobler AG, Haustechniksysteme, CH-8902 Urdorf, Ausgabe 1994, Seiten 2.59 und 2.60 veröffentlicht ist. Es handelt sich um ein in ein Rohrleitungssystem direkt einsetzbares Durchflußmeßgerät mit einem integrierten Feinregulierventil. Mit Hilfe des Feinregulierventils läßt sich die vom Durchflußmeßgerät angezeigte Durchflußmenge verändern. Diese Lösung weist jedoch den Nachteil auf, daß ihr Einsatz auf saubere Flüssigkeiten beschränkt ist. Bedingt durch den mechanischen Aufbau dieses Durchflußmeßgerätes ist ein periodischer Wartungsdienst und ein zusätzlicher Kontrollaufwand erforderlich. Bei verschmutzten Medien muß daher mit Fehlmessungen gerechnet werden. Zudem verändert ein solches direkt in den Strömungsweg eingebautes Durchflußmeßgerät auch den Strömungswiderstand im Rohrleitungssystem. Letzterer Nachteil wird mittels einer anderen Lösung zu umgehen versucht, indem der Durchflußmesser in eine Bypassleitung zu einem Absperrventil angeordnet ist. Diese Lösung vermag zwar die Funktionsfähigkeit zu verbessern, sie bedingt aber eine Verringerung der Meßgenauigkeit.

Durch die FR-A-2 713 764 ist ein Sensor in Form eines Druckwächters mit integrierter Temperaturmessung bekannt. Dieser in eine Rohrleitung einzubauende Sensor verfügt über eine Membran, die auf Druckveränderungen reagiert. Bei Überschreitung von festgelegten Grenzwerten wird damit ein Ein- oder Ausschaltsignal geliefert. Mit Hilfe der Temperaturerfassung wird gleichzeitig auch das Vorhandensein einer Strömung ermittelt und mit Hilfe von Zusatzgeräten zur Anzeige gebracht.

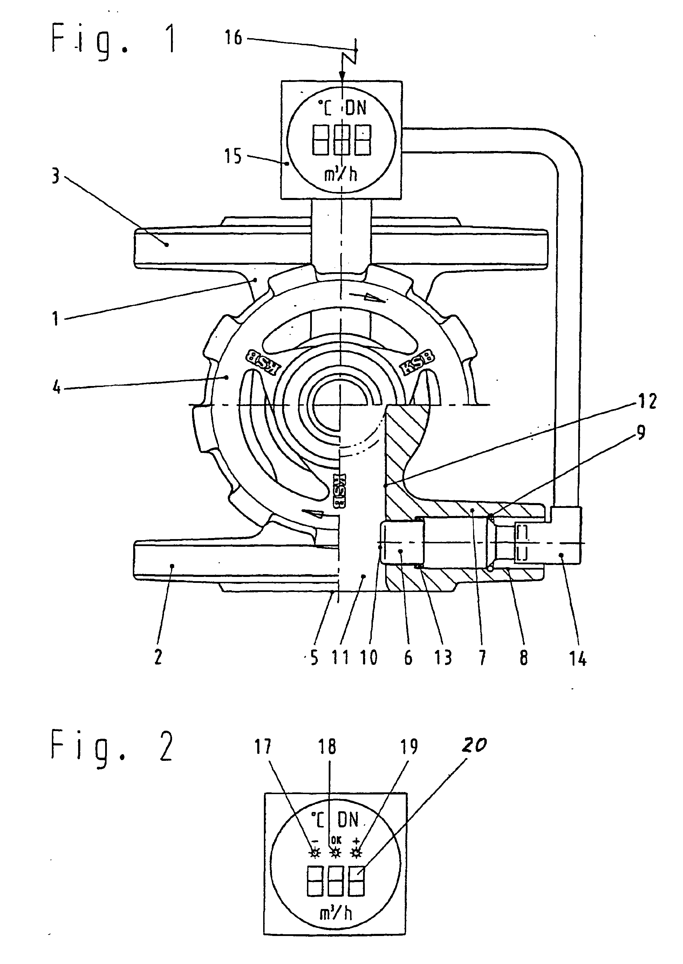

Durch die DE-A 34 32 494 ist eine Regelungs- und/oder Steueranordnung zur Regelung bzw. Steuerung des Durchsatzes von Gas oder Flüssigkeitsströmen in Rohrleitungen bekannt. Diese Einrichtung soll eine flexible Ausgestaltung von industriellen oder technischen Anlagen im Hinblick auf deren Änderungen oder Erweiterungen ermöglichen. Die dazu vorgeschlagene Lösung sieht vor, daß das Stellglied, der Aktuator, der Sensor und die Steuervorrichtung zu einer Baueinheit zusammengefaßt sind und als solche in die Rohrleitung einfügbar ist. Diese Konzentration zu einer Baueinheit soll eine leichtere Montage an der geeigneten Stelle eines Rohrleitung ermöglichen. Gegenüber den bisherigen Regelsystemen, die aus diskreten Komponenten aufgebaut wurden und mehr Platz erfordern, ist die einfachere Verbindungstechnik der in einem einzigen Gehäuse untergebrachten einzelnen Komponenten, die durch eine gemeinsame Stromversorgung gespeist werden, ein Vorteil. Gemäß der Fig. 1 verfügt aber diese Steileinheit doch über ein erhebliches Bauvolumen. Sie muß mindestens so groß ausgebildet sein, um sowohl ein Dreiwegeventil, Teile der mit dem Dreiwegeventil verbundenen Rohrleitungen sowie ein längeres Rohrleitungsstück, in dem mit Abstand zum Dreiwegeventil ein Sensor angeordnet ist, aufnehmen zu können. Der Sensor muß mit großem Abstand zum Dreiwegeventil angeordnet sein, um die innerhalb der Armatur auftretenden Strömungsturbulenzen durch das als Beruhigungsstrecke wirkende Rohrleitungsstück ausgleichen zu können. Die Schrift bezieht sich ausdrücklich immer nur auf den in einer Rohrleitung eingesetzten Sensor, der je nach Aufbau verschiedene physikalische, chemische oder biologische Zustände eines Mediums erfassen kann.

Die nach dem Baukastensystem gestaltete Stelleinheit kann jeweils nur immer mit einem Sensor ausgestattet werden, wobei sichergestellt sein muß, daß die von den verschiedenen einsetzbaren Sensoren abgegebenen Regelgrößen mit den Eingangssignalwerten einer Steuervorrichtung kompatibel sind. Zusätzlich zu der in die Steuereinrichtung eingegebenen Regelgröße des austauschbaren Sensors ist ein weiterer permanent angeordneter Sensor als Temperatursensor vorhanden. Da in vielen Anwendungsfällen die Temperatur eine Störgröße darstellt und einen Regelvorgang beeinträchtigen kann, wird die von dem permanent angeordneten Temperatursensor abgegebene Störgröße und die vom auswechselbaren, mit dem Fördermedium in Verbindung stehenden Sensor gelieferte Regelgröße in der Steuervorrichtung aufbereitet und zu einem Ansteuersignal verarbeitet, in dem die Störgröße kompensiert wurde.

Diese Lösung in Form einer autarken, dezentralen Intelligenz verfügt über ein sehr großes Bauvolumen und ist daher nur in großen Prozeßanlagen verwendbar. Die Ausbildung als Baueinheit erlaubt zwar eine einfachere Montage, aber stellt aufgrund des Mehrwegeventiles und der als Sammelleitung fungierenden Rohrleitung mit dem darin angeordneten, im Abstand zum Mehrwegeventil eingebauten Sensor durch die Anordnung innerhalb eines gemeinsamen Gehäuses ein schwierig zu handhabendes Gebilde dar. Der durch die Rohrleitung zwischen Armatur und dem Sensor gebildete Abstand ist aus meßtechnischen Gründen funktionsnotwendig. Denn um ein reproduzierbares Meßsignal erhalten zu können, muß bei dieser Lösung der Sensor durch das als Beruhigungsstrecke dienende Rohrleitungsstück vom Ventil getrennt angeordnet sein. Im Ventilgehäuse gebildete Turbulenzen werden darin auf dem Wege zum Sensor hin kompensiert.

Zusätzliches Bauvolumen bedingen ein ebenfalls innerhalb des Gehäuses angeordneter Stellmotor des Ventils, ein Getriebe, ein Endstellungssensor zur Erfassung der Endlagen vom Verschlußorgan des Stellgliedes, sowie ein zusätzlicher Temperatursensor zur Eliminierung von Temperaturänderungen als Störgrößen.

Durch die EP 637 713 A1 ist ein Diagnose-System für Stellgeräte in Form von Regelventilen bekannt. Mit den Regelventilen werden Prozesse von Anlagen geregelt und das Diagnosesystem dient zur Kontrolle des Abnutzungsgrades des Stellgerätes, um im Rahmen einer vorbeugenden Wartung die Ausfallsicherheit zu verbessern.

Durch die US 5 472 014 ist eine Strangregulierung mittels zweier Klappen bekannt. Ein Messventil misst die von einer Strangregulierarmatur veränderte Durchflussmenge. Mit Hilfe von in die Strömung einzuführenden Messsonden, Auswertung der Messergebnisse und deren Abgleich anhand von Tabellen wird die Strangregulierarmatur auf einen gewünschten Wert eingestellt.

Die DE 19622438 A1 zeigt ein Stellgerät in Form eines Mischers oder Regelventils. Es dient für den Regelprozess in einer Klimaanlage. Eine Kontrolleinheit liefert die Regelsignale für das Stellgerät, in dem zusätzlich ein Wirbelstromzähler integriert ist, dessen Signale in der Kontrolleinheit für den Regelprozess verarbeitet werden.

Sehr genau und berührungslos sowie keinen zusätzlichen Strömungswiderstand bietende Durchflußmeßgeräte sind beispielsweise die sogenannten induktiven Durchflußmeßgeräte (IDM). Da sie sehr teuer sind, werden sie üblicherweise immer nur kurzzeitig zur Einregulierung an einem Meßort verwendet. Dies bedingt einen hohen Aufwand in Form von Anlagenabschaltung, Entleerung der Anlage sowie Ein- und Ausbau des Meßgerätes und nachfolgende Inbetriebnahme der Anlage. Wird eine Anlage in ihrem Aufbau verändert, sind mit gleich hohem Aufwand Wiederholungsmessungen erforderlich.

Der Erfindung liegt das Problem zugrunde, zur Einregulierung von Rohrleitungssträngen eine einfache Möglichkeit zu entwickeln, mit deren Hilfe in wenig aufwendiger Weise ein Volumenstrom an die jeweiligen Rohrleitungsverhältnisse angepaßt werden kann.

Die Lösung dieses Problems erfolgt mit den kennzeichen Merkmalen von Anspruch 1. Gewöhnlich ist davon auszugehen, daß der Sensor an einem Einbauort mit gleichbleibenden oder reproduzierbaren Strömungsverhältnissen im Zuströmbereich des Armaturengehäuses befindlich ist. Somit können bestehende Absperrarmaturen, vorzugsweise Hubventile mit guten Drosseleigenschaften, in einfacher Weise gleichzeitig als Strangregulierarmatur Verwendung finden. Aufwendig konstruierte und herzustellende Strangregulierarmaturen mit besonderen Meßbohrungen und den dadurch bedingten Gefahren beim Anschließen von Meßleitungen können entfallen. Es genügt, werksseitig in ein Gehäuse einer Absperrarmatur einen Sensor zu integrieren, dessen Sensorfläche mindestens flächenbündig oder geringfügig

in den Strömungsraum hereinragt. Damit kann ohne störende Einwirkung auf die Strömung der Volumenstrom gemessen werden. Hierzu wird eine vom Sensor gelieferte Meßgröße verwandt, die in Relation zum Volumenstrom steht. Die Abhängigkeit dieser Meßgröße von dem in der Armatur herrschenden Volumenstrom wird vorzugsweise mit Hilfe eines Eichvorganges ermittelt. Für die Zuordnung der Meßgröße zum Volumenstrom können auch andere Methoden, zum Beispiel rechnerische Verfahren, Verwendung finden. Der Sensor verbleibt ständig im Gehäuse und ist darin dichtend angeordnet. Somit muß bei Verwendung einer solchen Strangregulierarmatur im Bedarfsfall in das druckführende Rohrleitungssystem nicht mehr eingegriffen werden. Je nach Aufbau könnte der Volumenstrom direkt oder nach Herstellung einer Datenverbindung an der Auswerteeinheit abgelesen werden. Dies ist problemlos möglich und gefährdet das Bedienungspersonal oder die Umwelt in keiner Weise.

Ausgestaltungen der Erfindung sehen vor, daß der Strömungsraum der Strangregulierarmatur in Wirkverbindung mit einem Strömungsraum eines separaten Strömungsgehäuses steht und daß mindestens ein Sensor im Bereich des Strömungsraumes des separaten Strömungsgehäuses angeordnet ist. Auch ist mindestens ein Sensor im Bereich des Strömungsraumes der Strangregulierarmatur angeordnet.

Damit ist in einfacher Weise die Möglichkeit zur Umwandlung einer Standard-Absperrarmatur in eine Strangregulierarmatur gegeben. Die Anordnung des den Sensor enthaltenden Strömungsgehäuses in unmittelbarer Nähe der Absperrarmatur ermöglicht die Herstellung einer Strangregulierarmatur als leicht montierbare Baueinheit. Ein so als Baueinheit hergestelltes Strangregulierventil benötigt lediglich eine einmalige Eichung, um die strömungstechnische Wirkverbindung erfassen zu können. Die strömungstechnische Wirkverbindung wird beeinflußt durch eine Positionsänderung des Regulier- und/oder Absperrorgans. Die Eichung der Baueinheit liefert die Voraussetzung, um mit Hilfe des Sensors sinnvolle Messungen ausführen zu können. Und gegenüber separat in eine Rohrleitung einzubauende Volumenstrom-Meßgeräten ergibt die als Baueinheit ausgebildete und geeichte Strangregulierarmatur eine gravierende Baulängenverkürzung. Denn diese Gesamtanordnung kann auf eine Beruhigungsstrecke zwischen separatem Strömungsgehäuse und Strangregulierarmatur verzichten, die zwischen marktüblichen Volumernstrommeßgeräten und Strangregulierarmaturen für die Beruhigung der zu messenden Strömung zwingend erforderlich sind.

Zum Beispiel bei vorhandenen Rohrleitungssystemen, sogenannten Altanlagen, ermöglicht dies den Austausch von Absperrventilen in langer Ventilbaulänge durch eine Strangregulierarmatur, die als Baueinheit aus einem kurzbauenden Kompaktventil und einem separaten Strömungsgehäuse mit integrietem Sensor besteht. Unter Verwendung von gegebenenfalls notwendigen Ausgleichsstücken zum Ausgleich der Baulängendifferenz ist ein Einbau ohne Veränderung der bestehenden Rohrleitung möglich.

Der Verwendung findende Sensor wandelt die zu messende physikalische Größe und ihre Änderung in elektrische Größe und deren Änderung um, die elektronisch weiterverarbeitet oder übertragen werden können. Je nach Aufbau des Sensors und dem Verwendung findenden Integrations- und/oder Miniaturisierungsgrad, können in den Sensor sowohl eine Signalaufbereitung als auch Signalverarbeitung eingebaut sein.

Eine Ausgestaltung der Erfindung sieht einen nach dem kalorimetrischen Meßprinzip arbeitenden Sensor vor. Je nach Verwendung findendem Armaturengehäuse wird für den Sensor ein Einbauort gewählt, an dem im relevanten Drosselbereich reproduzierbare Strömungsverhältnisse herrschen, die unabhängig von der Lage des Absperrkörpers in Relation zu seinem Sitz sind. Dies ist in einfacher Weise auf der Zuströmseite eines strömungsführenden Gehäuses der Fall, insbesondere im Bereich des Eintrittsflansches und zwar um 90° zur Spindelachse versetzt. Zur Bestimmung des Volumenstromes ist somit die Erfassung der Lage des Absperrkörpers in Relation zu seinem Sitz nicht mehr erforderlich. Die Beziehung zwischen Meßsignal und Volumenstrom wird beispielsweise versuchstechnisch, in Form eines Eichvorganges, ermittelt.

Wenn Armaturen Verwendung finden, in denen aufgrund der Bauform schwierige Strömungsverhältnisse existieren, können mehrere Sensoren Anwendung finden. Diese sind dann in Bereich des zu messenden Strömungsquerschnitts über den Umfang verteilt angeordnet. Für solche Anwendungsfälle wird durch eine Mittelwertbildung von den Meßwerten der einzelnen Sensoren der Volumenstrom bestimmt.

Eine weitere Ausgestaltung der Erfindung sieht vor, daß der Sensor in der Wand des Strömungsraumes mindestens flächenbündig oder mit einem geringen Überstand in den Strömungsraum hineinragt. Diese Maßnahme gewährleistet einerseits eine zuverlässige Erfassung des Volumenstromes, der sich in einem reproduzierbaren Verhältnis zum Meßsignal befindet. Andererseits ist eine dadurch bedingte Erhöhung des Widerstandsbeiwertes der Armatur vernachlässigbar gering.

Nach einer weiteren Ausgestaltung der Erfindung kann die Auswerteeinheit direkt oder durch Verbindungsmittel mit dem Sensor verbunden sein. Die Auswerteeinheit kann somit als kompakte, hochintegrierte Einheit direkt am Sensor oder unter Zwischenschaltung von Verbindungsmitteln an der Armatur montiert werden. Mit Hilfe von Anzeigemitteln sind die momentan in der Armatur vorherrschenden Volumenströme direkt ablesbar. Je nach Aufbau der Auswerteeinheit könnte dies ständig oder nur im Bedarfsfall erfolgen.

Gemäß einer weiteren Ausgestaltung sind im elektronischen Datenspeicher die gehäusespezifischen Kennwerte in Tabellenform, Kennlinienform oder als Algorithmus enthalten. Wenn der Sensor beispielsweise in einen Flansch eines Armaturengehäuses integriert und mit einem eigenen elektronischen Datenspeicher ausgestattet ist, kann in einfachster Weise eine Strangregulierung erfolgen. Die für ein jeweiliges Gehäuse typischen Kennwerte sind fest im eingebauten Sensor gespeichert. Jeder Sensor kann werksseitig entsprechend seinem speziellen Einbauort kalibriert sein. Um nun eine Anlage genau einzuregulieren, ist eine Auswerteeinheit mit dem Sensor in Verbindung zu bringen. Aufgrund der vom Sensor gelieferten Meßgrößen und in Verbindung mit den zugehörigen Kennwerten kann mit Hilfe der Auswerteeinheit in einfachster Weise der gewünschte Volumenstrom schnell und unproblematisch einreguliert werden. Hierzu muß lediglich die Lage des Abschlußkörpers je nach Ausführung manuell oder automatisiert verändert werden. Die Eingabe einer zusätzlichen Berechnungsgröße, z.B. der Stellung des Abschlußkörpers, ist nicht notwendig. Bei der Aufnahme einer Eichkurve werden im relevanten Volumenstrombereich des jeweiligen Gehäuses für mehrere und verschiedene voreingestellte Volumenströme die zugehörigen Meßwerte erfaßt und zugeordnet. Damit werden Ungenauigkeiten ausgeglichen; das Ergebnis ist genauer und gegenüber dem bisherigen teilweise manuellen und rechnerischen Aufwand sind Einsparungen möglich. Die Daten können als Kennlinie, Tabelle, Algorithmus oder in anderer bekannter Form im elektronischen Datenspeicher hinterlegt werden. Es ist auch möglich aus dem Volumenstrom mit Hilfe bekannter Mittel den Massenstrom zu ermitteln und anzuzeigen.

Weitere Ausgestaltungen der Erfindung sind in den Ansprüchen 5-7 beschrieben. Danach kann der elektronische Datenspeicher die gehäusespezifischen Kennwerte in Tabellenform, Kennlinienform oder als Algorithmus enthalten. Je nach Art und Aufbau des Anwendung findenden elektronischen Datenspeichers können die für die jeweilige Armatur typischen Kennwerte in einer Form abgelegt sein, die ein problemloses Auslesen durch eine Auswerteeinheit und den darin befindlichen Rechenelementen erlauben. Der Datenspeicher ist in den Sensor integriert. Ebenso kann der Datenspeicher teilweise im Sensor und teilweise in der Auswerteeinheit angeordnet sein, wobei der in den Sensor integrierte Datenspeicher mindestens eine Armaturenkennung enthält. Weiter enthält die Auswerteeinheit neben einem Mikrokontroller eine Spannungsversorgung, die als Verbindung zu einer externen Einrichtung ausgebildet sein kann oder als interne Einrichtung in Form von Batterien, Akkumulatoren oder ähnlichem vorliegt. Ferner Anzeigemittel, Bedienelemente und die notwendigen Verbindungselemente.

Die Einregulierung eines Stranges erfolgt durch einfaches Verstellen des Absperrorgans der Strangregulierarmatur auf den gewünschten und in der Auswerteeinheit angezeigten Volumenstrom. Je nach Anforderung kann die Auswerteeinheit als fest installiertes Bauteil oder als ein mobiles Gerät ausgebildet sein. Die Verbindung zwischen Auswerteeinheit und jeweiligem Sensor ist mit Hilfe der üblichen Verbindungstechnik möglich. Dies können feste oder lösbare Verbindungen sein oder drahtlose Kommunikationsmittel, wie Infrarotübertragung, Funkwellen und dergleichen.

Andere Ausgestaltungen der Erfindung sehen vor, daß ein in den Sensor integrierter Datenspeicher mit geringem Speicherinhalt eine Armaturenkennung enthält und daß ein in der Auswerteeinheit befindlicher elektronischer Datenspeicher in Kennlinien oder Tabellenform Armaturenkennwerte enthält.

Die Auswerteeinheit verfügt dabei über einen erheblich größeren elektronischen Datenspeicher mit allen Kennwerten der damit einregulierbaren Armaturen. Der kleine Datenspeicher eines Sensors enthält dann nur eine Kennung über diejenige Strangregulierarmatur, in die er eingebaut ist. Bei einer Kommunikation zwischen Sensor und Auswerteeinheit werden aufgrund der jeweiligen Kennung die entsprechenden Armaturdaten aus dem größeren Speicher der Auswerteeinheit ausgelesen und für die Verarbeitung bereitgehalten. Als elektronische Datenspeicher können übliche Speichermedien Anwendung finden.

Mit Hilfe von ein oder mehreren an ein Bussystem anschließbaren Schnittstellen lassen sich die Meßwerte des Sensors sowie die jeweiligen Kennlinien des zugeordneten Gehäuses auch an eine zentrale Leit- oder Schaltstelle übertragen. Durch den Datenaustausch über die Schnittstellen können die Daten oder Meßwerte mit einer zentralen Leit- oder Schaltstelle oder mit anderen Elementen des Rohrleitungssystems ausgetauscht werden.

Es ist auch möglich, in die Auswerteelektronik eine Anzeige zu integrieren, die aufgrund der vom Sensor erfaßten Meßgrößen direkt den aktuellen Volumenstrom anzeigt. Um den baulichen Aufwand gering zu halten, ist der Sensor als passives Element ausgebildet, dessen Spannungsversorgung mit Hilfe der Auswerteeinheit gewährleistet wird. Hierbei können die bekannten Energiequellen Verwendung finden.

In den Sensor kann weiterhin ein Element integriert sein, mit dessen Hilfe die Temperatur von dem innerhalb des Gehäuses befindlichen Medium erfaßbar ist. Auch dieser Wert kann direkt auf der Anzeige der Auswerteeinheit dargestellt werden.

Damit kann ein weiterer Vorteil in einfachster Weise dadurch erzielt werden, indem die innerhalb der Rohrleitungen transportierte Wärmeleistung und/oder der Wärmeverbrauch berechnet und angezeigt werden. Aus der Messung bzw. Berechnung von Temperaturdifferenz, beispielsweise zwischen Vor- und Rücklauf, und Volumenstrom kann die in Rohrleitungssystemen vorhandene Wärmeleistung berechnet werden. Zur Berechnung des Wärmeverbrauches ist lediglich eine zusätzliche Zeiterfassung erforderlich. Die notwendigen Meß- und Rechenwerte und zusätzlichen Bau- und Bedienelemente sind in die Auswerteeinheit oder in eine zentrale Leitstelle integrierbar. Die Sensoren können auch mit Hilfe entsprechender Verbindungsleitungen mit einer solchen Leitstelle verbunden werden.

Ein wesentlicher Vorteil dieser Erfindung besteht auch darin, daß der jeweilige Volumenstrom und die augenblickliche Mediumstemperatur ohne weiteren manuellen Aufwand direkt an der Strangregulierarmatur abgelesen werden können. Die bisher dazu erforderlichen zusätzlichen Durchflußmeßgeräte für die Rohrleitung entfallen ebenso wie die umständliche Druckverlustmessung mit Hilfe von zusätzlichen Schlauchverbindungen an einer Strangregulierarmatur. Damit wird der Aufwand für die jeweilige Einregulierung erheblich reduziert und gleichzeitig ist auch noch eine Platzeinsparung möglich. Durch die Integration des Sensors in eine normale Absperrarmatur bzw. in ein damit zusammenwirkendes separates Strömungsgehäuse bleibt deren Absperrfunktion unverändert und auf den Einsatz einer speziellen Strangregulierarmatur mit den problematischen Anschlußleitungen zur Meßdatenerfassung kann verzichtet werden.

Die Auswerteeinheit ermöglicht es auch, während eines Einreguliervorganges einen Sollwert des gewünschten Volumenstromes direkt in die Auswerteeinheit einzugeben. Mit Hilfe der Übertragungsmittel zwischen Auswerteeinheit und Sensor läßt sich dieser Sollwert im Datenspeicher des Sensors ablegen. Je nach Aufbau der Anlage kann bei einer temporären oder permanenten Kontrolle durch einen Soll-Ist-Vergleich in einfachster Weise festgestellt werden, ob eine Abweichung vorliegt. Sollte das der Fall sein, kann mit Hilfe einer Armaturenbetätigung nachreguliert werden. Der Reguliermechanismus kann ein übliches Handrad, ein Handhebel oder ein Stellmotor sein. Infolge der Möglichkeit der direkten visuellen Erfassung des augenblicklichen Volumenstromes auf einer Anzeige und ohne den zusätzlichen meßtechnischen Aufwand zur Erfassung der Lage oder Position der Absperrorgane wird in einfachster Weise eine Nachregulierung möglich. Sollte die stationär oder mobil verwendbare Auswerteeinheit permanent an einem zu überwachenden Gehäuse angeordnet werden, dann sind deren Befestigungsmöglichkeiten so gewählt, daß eine Anzeige unabhängig von der Einbaulage des zu überwachenden Gehäuses erfolgt.

Ausführungsbeispiele der Erfindung sind in den Zeichnungen dargestellt und werden im folgenden näher beschrieben. Es zeigen die
- Fig. 1: zeigt eine Draufsicht auf eine als Strangregulierarmatur ausgebildete Absperrarmatur mit einem Teilschnitt, die
- Fig. 2: zeigt eine andere Ansicht einer Anzeigeeinheit, die
- Fig. 3: zeigt eine Strangregulierarmatur als mehrteilige Baueinheit und die
- Fig. 4: eine technische Abwandlung der Fig. 3.

Die Fig. 1 zeigt eine Draufsicht auf eine Strangregulierarmatur 1, die mit Flanschen 2, 3 und einem Handrad 4 ausgestattet ist. In diesem Ausführungsbeispiel ist auf der Zuströmseite 5 ein Sensor 6 in den Flansch 2 integriert. Aufgrund der Baugröße des hier gezeigten Sensors weist der Flansch 2 eine Ausnehmung 7 mit einer Bohrung 8 auf. Diese Bohrung 8 nimmt den Sensor 6 auf, der mit seinem Ende 10 geringfügig in den Strömungsraum 11 hineinragt. Ein gewisser Vorstand über die Gehäusewandfläche 12 des Strömungsraumes 11 hat sich als sinnvoll gezeigt, um die tatsächlichen Strömungsverhältnisse außerhalb der in der Randzone befindlichen Grenzschichtströmung mit zu erfassen. Mit Hilfe von Dichtungen 13 wird ein Austritt des Strömungsmediums aus der Bohrung 8 verhindert. Die mechanische Sicherung in axialer Richtung erfolgt durch einen Sicherungsring 9. Je nach Aufbau des Gehäuses kann der Sensor auch an einer anderen Stelle angeordnet werden, an der mit geringem Aufwand die Integration vorgenommen werden kann.

An einem Ausgang des Sensors ist hier ein Verbindungsmittel 14 angeschlossen, das mit einer Anzeigeeinheit 15 in Verbindung steht. Das Verbindungsmittel kann hierbei als Steck-, Schraub-, oder sonstiges übliches Verbindungsmittel zur Herstellung elektrischer Verbindungen ausgebildet sein.

Die Anzeigeeinheit 15 kann von einer externen Spannungsquelle 16 versorgt werden und/oder über eine integrierte Spannungsquelle verfügen. Hierbei kann es sich um Akkumulatoren, Batterien, Netzgeräte und dergleichen handeln. Mit Hilfe von entsprechenden Schalt- oder Anzeigeelementen kann bei Bedarf oder permanent der jeweilige Volumenstrom und gegebenenfalls auch die jeweils vorherrschende Temperatur angezeigt werden.

Die für das Gehäuse dieser Strangregulierarmatur spezifischen Kennwerte sind in einem Datenspeicher des Sensors 6 abgelegt. Ein entsprechender Kalibrier- und Programmiervorgang kann werksseitig vorgenommen werden oder im Bedarfsfall am Einbauort eingegeben werden. Zur Einregulierung erfolgt eine Verbindung des Sensors 6 mit einer Auswerteeinheit, die aus dem integrierten Datenspeicher die jeweiligen Kennwerte ausliest und mit Hilfe des Meßsignals die Durchflußmenge ohne weitere Größen, wie z.B. die manuell einzugebende Hubstellung bei der Δp-Methode, berechnet und anzeigt. Die Ablage der jeweiligen Kennwerte des Gehäuses direkt in dem Sensor, dient in einfachster Weise der Fehlervermeidung. Bei denjenigen Einrichtungen, bei denen die entsprechenden Kennwerte in einer externen Einheit abgespeichert sind, muß sichergestellt werden, daß bei einer Einregulierung auch eine genaue Zuordnung zwischen dem einzuregulierenden Gehäuse und den zugehörigen Kennwerten erfolgt.

Die in Fig. 2 dargestellte Ansicht auf die Anzeigeeinheit zeigt eine mögliche Ausführung eines Soll-Ist-Vergleiches auf. Zur Einstellung des Volumenstromes verfügt sie über Kontrollampen von unterschiedlicher Kennung oder Farbe. Bei Verwendung von Leuchtdioden 17, 18, 19 unterschiedlicher Farbe können rote Leuchtdioden 17, 19 unzulässige Volumenströme anzeigen, während eine grüne Leuchtdiode 18 für den zulässigen Volumenstrom benutzt wird. Somit wäre eine einfache Einstellung sowie auch eine spätere Überprüfung durch Farbabgleich möglich. Die Spannungsversorgung für die Anzeigeeinheit kann von einem Netz abgezweigt werden. Auch hier bietet die Möglichkeit der Kennwertspeicherung innerhalb des Sensors in vorteilhafter Weise eine einfache Kalibriermöglichkeit und eine leichtere spätere Reguliermöglichkeit. Eine andere Möglichkeit des Soll-lst-Vergleiches besteht darin, in der Anzeige bei Unterschreitung des Sollwertes den Hinweis LOW bzw. bei Überschreitung den Hinweis HIGH darzustellen.

Eine Anzeige 20, die hier als digitale Anzeige dargestellt ist, stellt den gemessenen Volumenstrom dar. Die hierfür Verwendung findende technische Maßeinheit kann leicht an verschiedene Einheitensysteme angepaßt werden und ist nicht auf die gezeigte Einheit m³/h beschränkt. Eine Analoganzeige ist ebenfalls einsetzbar.

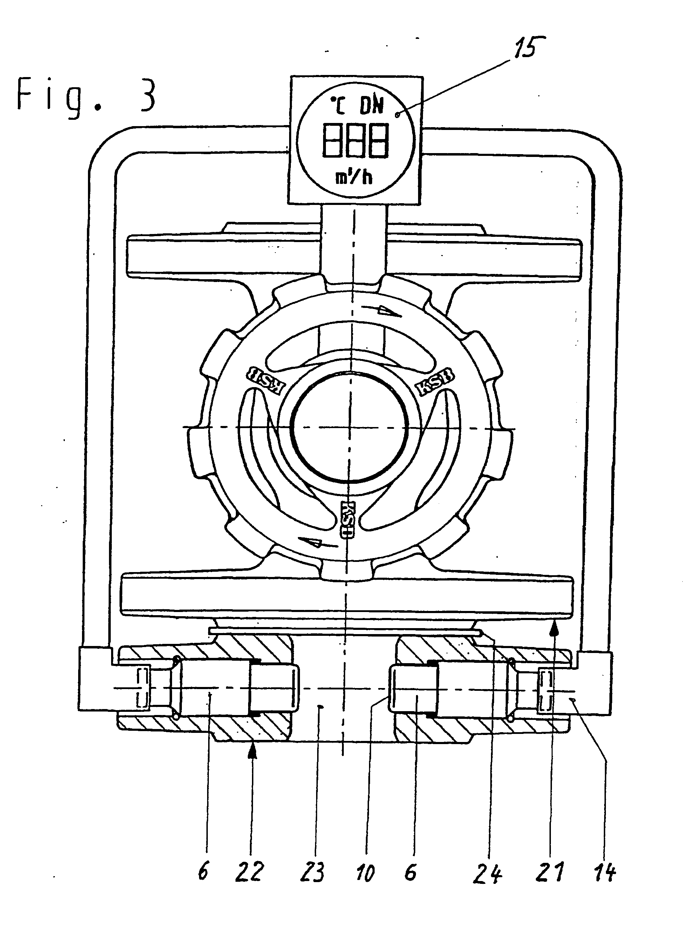

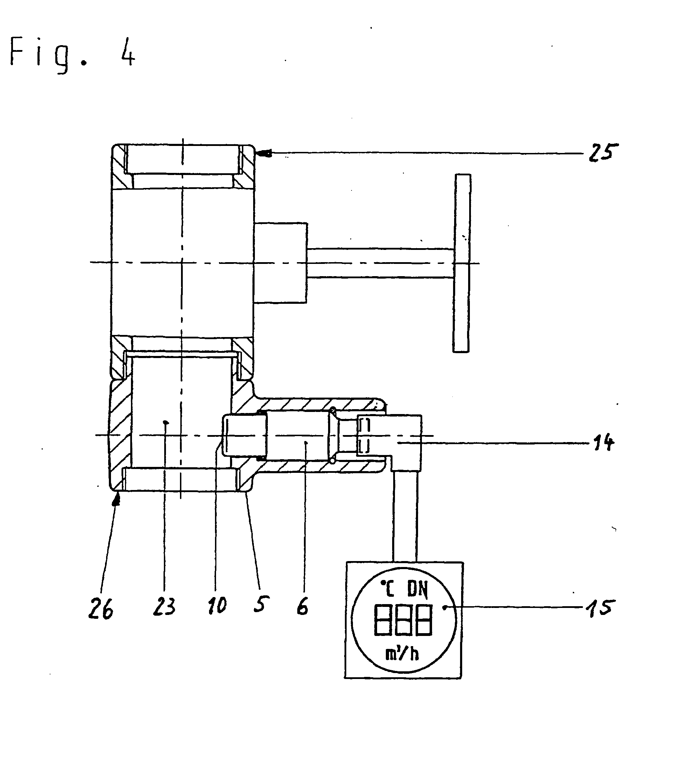

Die Fig. 3 zeigt eine Strangregulierarmatur, die als mehrteilige Baueinheit ausgebildet ist. Hierzu kann eine übliche Absperrarmatur, in der Darstellung wurde ein Kompaktventil in Kurzbaulänge verwendet, mit einem separaten Strömungsgehäuse 22 verbunden sein, wobei ein Sensor 6 in das separate Strömungsgehäuse 22 integriert ist. Beispielhaft wurde hier eine Sensoranordnung gezeigt, die mehrere Sensoren 6 benutzt. Diese sind über den Umfang verteilt angeordnet. Der Winkelabstand der Sensoren ist an die in der Armatur vorherrschenden Strömungsverhältnisse anzupassen. Das Strömungsgehäuse 22 kann hierbei ein- oder mehrteilig ausgebildet sein. Eine solche Sensoranordnung ist auch einer einer Ausführungsform möglich, wie sie in den Fig. 1 und 4 gezeigt ist. Die Anordnung, Befestigung und Abdichtung der Sensoren 6 entspricht der Darstellung des Sensors in Fig. 1. Mit seinem Ende 10 kann der Sensor 6 flächenbündig oder mit geringem Überstand in den Strömungsraum 23 des Strömungsgehäuses 22 heineinragen. Das Strömungsgehäuse 22 ist in diesem Ausführungsbeispiel als Flanschscheibe ausgebildet, um unter Zwischenhaltung von Dichtungen 24 oder Anpaßstücken mit der als Flanscharmatur gezeigten Absperrarmatur 21 und - hier nicht dargestellten - Rohrleitungen eine einfache Verbindung zu ermöglichen. Die Eichung dieser als Baueinheit ausgebildeten Strangregulierarmatur erfolgt in montierter Form, um alle Einflüsse erfassen zu können. Eine solche als Baueinheit ausgebildete Strangregulierarmatur eignet sich für Umbauarbeiten an bereits existierenden Rohrleitungssystemen. So kann anstelle einer Absperrarmatur in der üblichen langen Ventilbaulänge eine als Strangregulierventileinheit ausgebildete Strangregulierarmatur eingesetzt werden. Dadurch, daß die Strangregulierventileinheit einmal geeicht ist, können problemlos in meßtechnischer Hinsicht reproduzierbare Meßergebnisse erlangt werden, mit denen eine exakte Einregulierung von Rohrleitungssträngen der verschiedensten Art möglich ist. Der gravierende Vorteil einer solchen Strangregulierarmatur besteht in der kurzen Baulänge gegenüber den bisher üblichen Volumenstrom-meßgeräten mit ihren funktionstechnisch notwendigen langen Beruhigungsstrecken.

Die Fig. 4 zeigt eine als Baueinheit ausgebildete Strangregulierarmatur mit einer anderen Art der Verbindung. Die Absperrarmatur 25 verfügt über ein Gehäuse in Muffenbauart, in das anzuschließende Rohrleitungen eingesteckt oder eingeschraubt werden. Entsprechend dem inneren Aufbau der Armatur wird ein separates Strömungsgehäuse 26 mit darin analog zu den Figuren 1 und 3 angeordneten Sensor 6 auf derjenigen Gehäuseseite befestigt, die bei der Eichung die günstigsten reproduzierbaren Werte ergibt. Gewöhnlich ist dies, wie Versuche ergaben, die Zuströmseite. Der Einbau des Sensors 6 ist nicht auf die dargestellte Form beschränkt. Je nach Form und Aufbau des Sensors kann auch eine andere als die gezeigte Einbau-, Dichtung-, Befestigungs- und Verbindungsart gewählt werden. Die Größe des verwendeten Sensors 6 und die Form seines Gehäuses erlauben Schraub-, Klemm-, Niet-, Klebe- und andere bekannte Arten der Sensorbefestigung.

Somit ist eine Strangregulierarmatur herstellbar, die als funktionelle Einheit in einfachster Weise aus einer Abwandlung eines Serienproduktes erzeugt werden kann. Durch einfache direkte oder indirekte Adaption eines Sensors in oder an ein Gehäuse einer Absperrarmatur, wobei Bauarten mit guten Drosseleigenschaften vorteilhaft aber nicht Voraussetzung sind, und der meßtechnischen Eichung einer so gebildeten Strangregulierarmatur entsteht eine Strangregulierarmatur zur komfortablen Einregulierung von Rohrleitungssträngen.

## Patentansprüche

1. Strangregulierarmatur zur Einstellung von Volumenströmen in Rohrleitungen, insbesondere in Rohrleitungen von Versorgungssystemen, wobei mit Hilfe von Meßgeräten, Auswerte- und Anzeigemitteln ein Istzustand erfaßbar und mit einem in einen Strömungsraum ober Gehäuses der Strangregulierarmatur angeordneten Regulier- und/oder Absperrorgan ein Sollzustand einstellbar ist, mindestens ein den Volumenstrom des Strömungsraumes (11) direkt oder indirekt erfassender Sensor (6) im Bereich des Strömungsraumes (11) angeordnet ist, **dadurch gekennzeichnet, daß** der Sensor (6) ständig im Gehäuse verbleibt und darin dichtend angeordnet ist, daß in einem elektronischen Datenspeicher spezifische Kennwerte der Strangregulierarmatur abgelegt sind, daß eine Auswerteeinheit aus den Meßwerten des Sensors (6) und den Kennwerten des Datenspeichers den Volumenstrom ermittelt und daß der Datenspeicher in den Sensor (6) integriert ist.

2. Strangregulierarmatur zur nach Anspruch 1, **dadurch gekennzeichnet daß** der Strömungsraum der Strangregulierarmatur in Wirkverbindung mit einem Strömungsraum (23) eines separaten Strömungsgehäuses (22) steht und daß mindestens ein Sensor im Bereich des Strömungsraumes des separaten Strömungsgehäuses (22) angeordnet ist.

3. Strangregulierarmatur nach Anspruch 1 oder 2, **dadurch gekennzeichnet, daß** der Sensor (6) nach einem kalorimetrischen Meßprinzip arbeitet.

4. Strangregulierarmatur nach einem der Ansprüche 1 bis 3, **dadurch gekennzeichnet, daß** der Sensor (6) in der Wand (12) des Strömungsraumes (11, 23) mindestens flächenbündig angeordnet ist oder mit einem geringen Überstand in den Strömungsraum (11, 23) hineinragt.

5. Strangregulierarmatur einem der Ansprüche 1 bis 4, **dadurch gekennzeichnet, daß** die Auswerteeinheit mit dem Sensor (6) direkt oder durch Verbindungsmittel (14) verbunden ist.

6. Strangregulierarmatur nach einem der Ansprüche 1 bis 5, **dadurch gekennzeichnet, daß** der elektronische Datenspeicher die gehäusespezifischen Kennwerte in Tabellenform, Kennlinienform oder als Algorithmus enthält.

7. Strangregulierarmatur nach einem der Ansprüche 1 bis 6, **dadurch gekennzeichnet, daß** ein in den Sensor (6) integrierter Datenspeicher mit geringem Speicherinhalt ausgeführt ist und eine Armaturenkennung enthält.

8. Strangregulierarmatur nach einem der Ansprüche 1 bis 7, **dadurch gekennzeichnet, daß** die Auswerteeinheit und/oder der Sensor (6) ein oder mehrere Schnittstellen zum Datenaustausch aufweist.

9. Strangregulierarmatur nach einem der Ansprüche 1-8, **dadurch gekennzeichnet, daß** die Auswerteeinheit an der Strangregulierarmatur oder an dem strömungsführenden Gehäuse angeordnet ist.

10. Strangregulierarmatur nach einem der Ansprüche 1 bis 8, **dadurch gekennzeichnet, daß** die Auswerteeinheit als mobiles Gerät ausgebildet ist.

11. Strangregulierarmatur nach einem der Ansprüche 1 bis 9, **dadurch gekennzeichnet, daß** die Auswerteeinheit in einen oder mehrere Sensoren (6) integriert ist.

12. Strangregulierarmatur nach einem der Ansprüche 1 bis 11, **dadurch gekennzeichnet, daß** die Auswerteeinheit mit einer Anzeige (15) versehen ist.

13. Strangregulierarmatur nach Anspruch 12, **dadurch gekennzeichnet, daß** die Auswerteeinheit mit einer Spannungsversorgung (16) versehen und/oder verbunden ist.

14. Strangregulierarmatur nach einem der Ansprüche 1 bis 13, **dadurch gekennzeichnet, daß** der Sensor (6) auf der Zuströmseite des strömungsführenden Gehäuses angeordnet ist.

15. Strangregulierarmatur nach einem der Ansprüche 1 bis 14, **dadurch gekennzeichnet, daß** der Sensor (6) zusätzlich mit einer Temperaturerfassung zur Bestimmung der Wärmeleistung und/oder Wärmemenge ausgestattet ist.

## Claims

1. Section control valve for setting volume flows in pipes, in particular in pipes of supply systems, it being possible for an actual state to be recorded with the aid of measuring instruments, evaluation and display devices and for a desired state to be set by means of a control and/or shut-off member arranged in a flow chamber of the housing of the section control valve, at least one sensor (6) being arranged in the region of the flow chamber (11) which directly or indirectly records the volume flow of the flow chamber (11), **characterized in that** the sensor (6) remains permanently in the housing and is arranged in a sealing manner therein, **in that** specific characteristic values of the section control valve are stored in an electronic data store, **in that** an evaluation unit determines the volume flow from the values measured by the sensor (6) and from the characteristic values of the data store and **in that** the data store is integrated into the sensor (6).

2. Section control valve according to Claim 1, **characterized in that** the flow chamber of the section control valve is operatively connected to a flow chamber (23) of a separate flow housing (22), and **in that** at least one sensor is arranged in the region of the flow chamber of the separate flow housing (22).

3. Section control valve according to Claim 1 or 2, **characterized in that** the sensor (6) operates according to a calorimetric measuring principle.

4. Section control valve according to one of Claims 1 to 3, **characterized in that** the sensor (6) is arranged in the wall (12) of the flow chamber (11, 23) at least flush with the surface or protrudes with a slight projection into the flow chamber (11, 23).

5. Section control valve according to one of Claims 1 to 4, **characterized in that** the evaluation unit is connected to the sensor (6) directly or by connecting means (14).

6. Section control valve according to one of Claims 1 to 5, **characterized in that** the electronic data store contains the housing-specific characteristic values in the form of a table, in the form of a characteristic curve or as an algorithm.

7. Section control valve according to one of Claims 1 to 6, **characterized in that** a data store integrated into the sensor (6) is designed to have a small storage capacity and to contain a valve code.

8. Section control valve according to one of Claims 1 to 7, **characterized in that** the evaluation unit and/or the sensor (6) has one or more interfaces for data exchange.

9. Section control valve according to one of Claims 1 to 8, **characterized in that** the evaluation unit is arranged on the section control valve or on the flow-conducting housing.

10. Section control valve according to one of Claims 1 to 9, **characterized in that** the evaluation unit is configured as a mobile device.

11. Section control valve according to one of Claims 1 to 9, **characterized in that** the evaluation unit is integrated into one or more sensors (6).

12. Section control valve according to one of Claims 1 to 11, **characterized in that** the evaluation unit is provided with a display (15).

13. Section control valve according to Claim 12, **characterized in that** the evaluation unit is provided with and/or connected to a voltage supply (16).

14. Section control valve according to one of Claims 1 to 13, **characterized in that** the sensor (6) is arranged on the inflow side of the flow-conducting housing.

15. Section control valve according to one of Claims 1 to 14, **characterized in that** the sensor (6) is fitted additionally with a temperature recording device to determine the heat output and/or heat quantity.

## Revendications

1. Robinet de régulation pour le réglage d'écoulements volumiques dans des conduits tubulaires, en particulier dans des conduits tubulaires de systèmes d'alimentation, dans lesquels une situation instantanée peut être détectée à l'aide d'appareils de mesure, de moyens d'évaluation et d'affichage et une situation de consigne peut être réglée à l'aide d'un organe de régulation et/ou d'arrêt disposé dans une chambre d'écoulement du boîtier du robinet de régulation, au moins un capteur (6) détectant directement ou indirectement l'écoulement volumique de la chambre d'écoulement (11) étant disposé dans la zone de la chambre d'écoulement (11), **caractérisé en ce que** le capteur (6) demeure constamment dans le boîtier et y est disposé de manière hermétique, **en ce que** des valeurs caractéristiques spécifiques du robinet de régulation sont introduites dans une mémoire électronique de données, **en ce qu'**une unité d'évaluation détermine l'écoulement volumique à partir des valeurs de mesure du capteur (6) et des valeurs caractéristiques de la mémoire de données et **en ce que** la mémoire de données est intégrée dans le capteur (6).

2. Robinet de régulation selon la revendication 1, **caractérisé en ce que** la chambre d'écoulement du robinet de régulation est en liaison de travail avec une chambre d'écoulement (23) d'un boîtier d'écoulement (22) séparé et **en ce qu'**au moins un capteur est disposé dans la zone de la chambre d'écoulement du boîtier d'écoulement (22) séparé.

3. Robinet de régulation selon la revendication 1 ou 2, **caractérisé en ce que** le capteur (6) fonctionne suivant un principe de mesure par calorimétrie.

4. Robinet de régulation selon l'une des revendications 1 à 3, **caractérisé en ce que** le capteur (6) est disposé dans la paroi (12) de la chambre d'écoulement (11, 23) au moins de chant par rapport à la surface, ou pénètre d'une petite distance dans la chambre d'écoulement (11, 23).

5. Robinet de régulation selon l'une des revendications 1 à 4, **caractérisé en ce que** l'unité d'évaluation est reliée au capteur (6) directement ou par l'intermédiaire de moyens de liaison (14).

6. Robinet de régulation selon l'une des revendications 1 à 5, **caractérisé en ce que** la mémoire électronique de données contient les valeurs caractéristiques spécifiques au boîtier sous forme de tableaux, sous forme de lignes caractéristiques ou en tant qu'algorithme.

7. Robinet de régulation selon l'une des revendications 1 à 6, **caractérisé en ce qu'**une mémoire de données intégrée dans le capteur (6) est réalisée avec une petite capacité de mémoire et contient une caractéristique identifiant le robinet.

8. Robinet de régulation selon l'une des revendications 1 à 7, **caractérisé en ce que** l'unité d'évaluation et/ou le capteur (6) présentent une ou plusieurs interfaces pour l'échange de données.

9. Robinet de régulation selon l'une des revendications 1 à 8, **caractérisé en ce que** l'unité évaluation est disposée sur le robinet de régulation ou sur le boîtier conduisant l'écoulement.

10. Robinet de régulation selon l'une des revendications 1 à 9, **caractérisé en ce que** l'unité d'évaluation est configurée comme appareil mobile.

11. Robinet de régulation selon l'une des revendications 1 à 9, **caractérisé en ce que** l'unité d'évaluation est intégrée dans un ou plusieurs capteurs (6).

12. Robinet de régulation selon l'une des revendications 1 à 11, **caractérisé en ce que** l'unité d'évaluation est dotée d'un affichage (15).

13. Robinet de régulation selon la revendication 12, **caractérisé en ce que** l'unité d'évaluation est dotée d'une alimentation en tension (16) et/ou est reliée à cette dernière.

14. Robinet de régulation selon l'une des revendications 1 à 13, **caractérisé en ce que** le capteur (6) est disposé sur le côté de l'entrée d'écoulement du boîtier conduisant l'écoulement.

15. Robinet de régulation selon l'une des revendications 1 à 14, **caractérisé en ce que** le capteur (6) est en outre équipé d'une détection de température pour la détermination de la puissance thermique et/ou de la quantité de chaleur.
